# EUROPEAN PATENT APPLICATION

(11) **EP 2 395 419 A2**
(43) Date of publication of application: **14.12.2011**
(21) Application number: 10014415.3
(22) Date of filing: 09.11.2010
(51) Int. Cl.: G06F 3/048

(54) **Mobile terminal and displaying method therefor**

(30) Priority: 09.06.2010 KR 20100054151
(71) Applicant: LG ELECTRONICS INC., Youngdungpo-gu Seoul 150-721 (KR)
(72) Inventor: Kim, Jong Hwan, Gwanak-gu Seoul (KR)
(74) Representative: Beyer, Andreas

(57) **Abstract**

A mobile terminal and a method of controlling the same are provided. The mobile terminal includes a display and a controller partitioning the display into a first region displaying at least a portion of contents capable of being visually outputted on the display and a second region to receive a touch input. The controller is configured to display the portion of contents in an initial display state prior to the touch input being applied to the second region, to change the display state of the portion of contents in response to the touch input applied to the second region, and to return the display to the initial display state when the touch input is removed. The contents displayed in the first region can be handled by touching the second region.

## Description

### CROSS-REFERENCE TO RELATED APPLICATIONS

This application claims priority to Korean Patent Application No. 10-2010-0054151, filed on June 9, 2010, which is incorporated by reference herein in its entirety.

### BACKGROUND OF THE INVENTION

### Field of the Invention

This disclosure relates to a mobile terminal and a method of controlling the same, and more particularly, to a mobile terminal and a method of controlling the same to handle contents displayed in a first region through a touch applied to a second region.

### Description of Related Art

As the functions of terminals such as personal computers, laptop computers, cellular phones and the like are diversified, the terminals are constructed in the form of a multimedia player having multiple functions of capturing pictures or moving images, playing music, moving image files and games and receiving broadcasting programs.

In addition, terminal can be divided into mobile terminals and stationary terminals. The mobile terminals can be classified into handheld terminals and vehicle mount terminals according to whether users can personally carry the terminals.

Generally these terminals include displays, which are configured to output images or video on the displays. However, these displays are not configured to allow a user to easily display related information, data, or associated content by manipulation of the display.

### BRIEF SUMMARY OF THE INVENTION

An object of this disclosure is to address one or more problems with the related art by providing a mobile terminal and a method of controlling the same to handle contents displayed in a first region through a touch applied to a second region.

In accordance with the present disclosure, the above and other objects can be accomplished by the provision of a mobile terminal including a display and a controller configured to partition the display into a first region to display at least a portion of contents capable of being visually outputted on the display and a second region to receive a touch input. The controller is also configured to display the portion of contents in an initial display state prior to the touch input being applied to the second region, to change the display state of the portion of contents in response to the touch input applied to the second region, and to return the display to the initial display state when the touch input is removed.

In accordance with another aspect of the present disclosure, there is provided a mobile terminal including a display and a controller configured to partition the display into a first region to display at least a portion of contents capable of being visually outputted on the display and a second region to receive a touch input, wherein the controller is configured to display the portion of contents in an initial display state prior to the touch input being applied to the second region, to display information associated with the portion of contents displayed in the first region in the second region when the touch input is applied to the second region, and to return the display to the initial display state when the touch input is removed.

In accordance with yet another aspect of the present disclosure, there is provided a mobile terminal including a display and a controller partitioning the display into a first region displaying at least a portion of contents capable of being visually outputted on the display and a second region to receive a touch input, wherein the controller is configured to change a display state of the portion of contents displayed in the first region in response to the touch input applied to the second region.

In accordance with still another aspect of the present disclosure, a method of controlling a mobile terminal having a display and a controller in provided. The method including displaying at least a portion of contents capable of being visually outputted in a first region of a display, receiving a touch input through a second region of the display, changing a display state of the portion of contents displayed in the first region from an initial display state to a changed display state in response to receiving the touch input, and displaying the contents in the initial display state when the touch input is removed.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompany drawings, which are included to provide a further understanding of this disclosure and are incorporated on and constitute a part of this specification illustrate embodiments of this disclosure and together with the description serve to explain the principles of this disclosure.
- FIG. 1: is a block diagram of an implementation of a mobile terminal;
- FIG. 2A: is a front perspective view of the mobile terminal shown in FIG. 1;
- FIG. 2B: is a rear perspective view of the mobile terminal shown in FIG. 1;
- FIGS. 2C and 2D: illustrate implementations of forms of the mobile terminal and display screens;
- FIG. 3: is a conceptual view for explaining a proximity depth of a proximity sensor;
- FIG. 4: is a flowchart showing an implementation of an operation of the mobile terminal;
- FIG. 5: illustrates an operation of displaying contents in a first region according to the operation of the mobile terminal shown in FIG. 4;
- FIGS. 6 and 7: illustrate an operation of receiving a touch input applied to a second region according to the operation of the mobile terminal shown in FIG. 4;
- FIG. 8: illustrates an operation of changing a display state of the contents in response to the touch input according to the operation of the mobile terminal shown in FIG. 4;
- FIG. 9: illustrates an operation of displaying the contents in the state before being changed when the touch input is ended according to the operation of the mobile terminal shown in FIG. 4;
- FIG. 10: is a flowchart showing in more detail the operation of receiving the touch input applied to the second region according to the operation of the mobile terminal shown in FIG. 4;
- FIG. 11: illustrates an operations of the mobile terminal according to the operation shown in FIG. 10;
- FIG. 12: is a flowchart showing in more detail the operation of changing the display state of the contents in response to the touch input according to the operation of the mobile terminal shown in FIG. 4;
- FIGS. 13 and 14: illustrate an operation of the mobile terminal according to the operation shown in FIG. 12;
- FIG. 15: is a flowchart showing in more detail the operation of displaying the contents in the initial state before being changed when the touch input is ended according to the operation of the mobile terminal shown in FIG. 4;
- FIG. 16: illustrates an operation of the mobile terminal according to the operation shown in FIG. 15;
- FIG. 17: illustrates another implementation of the operation of the mobile terminal;
- FIG. 18: is a graph showing enlargement rates of displayed images in the mobile terminal according to the operation shown in FIG. 17; and
- FIGS. 19 through 26: illustrate different implementations of operations of the mobile terminal.

### DETAILED DESCRIPTION OF THE INVENTION

The present disclosure will now be described more fully with reference to the accompanying drawings, in which exemplary embodiments of the invention are shown. The invention may, however, be embodied in many different forms and should not be construed as being limited to the embodiments set forth herein; rather, the embodiments are provided so that this disclosure will be thorough and complete, and will fully convey the concept of the invention to those skilled in the art.

Hereinafter, a mobile terminal relating to an embodiment of the present disclosure will be described below in more detail with reference to the accompanying drawings. In addition, the mobile terminal according to embodiments of the present disclosure can include a cellular phone, a smart phone, a laptop computer, a digital broadcasting terminal, personal digital assistants (PDA), a portable multimedia player (PMP), a navigation system and so on.

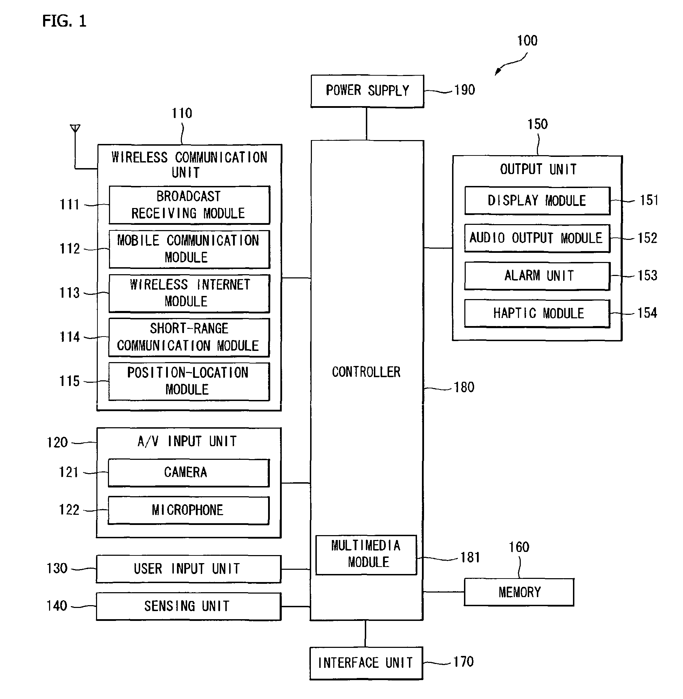

FIG. 1 is a block diagram of a mobile terminal 100 according to an embodiment of the present disclosure. As shown, the mobile terminal 100 can include a radio communication unit 110, an audio/video (A/V) input unit 120, a user input unit 130, a sensing unit 140, an output unit 150, a memory 160, an interface 170, a controller 180, and a power supply 190. The components shown in FIG. 1 can be included or excluded as necessary and the number of components included in the mobile terminal can be varied. Further, the terms module and unit may be used interchangeably when describing some of the components.

In addition, the radio communication unit 110 can include at least one module that enables radio communication between the mobile terminal 100 and a radio communication system or between the mobile terminal 100 and a network in which the mobile terminal 100 is located. For example, the radio communication unit 110 can include a broadcasting receiving module 111, a mobile communication module 112, a wireless Internet module 113, a local area communication module 114 and a position information module 115.

The broadcasting receiving module 111 receives broadcasting signals and/or broadcasting related information from an external broadcasting management server through a broadcasting channel. Further, the broadcasting channel can include a satellite channel and a terrestrial channel, and the broadcasting management server can be a server that generates and transmits broadcasting signals and/or broadcasting related information or a server that receives previously created broadcasting signals and/or broadcasting related information and transmits the broadcasting signals and/or broadcasting related information to a terminal. The broadcasting signals can include not only TV broadcasting signals, radio broadcasting signals and data broadcasting signals but also signals in the form of combination of a TV broadcasting signal and a radio broadcasting signal.

Also, the broadcasting related information can be information on a broadcasting channel, a broadcasting program or a broadcasting service provider, and can be provided even through a mobile communication network. In this instance, the broadcasting related information can be received by the mobile communication module 112.

The broadcasting related information can exist in various forms. For example, the broadcasting related information can exist in the form of an electronic program guide (EPG) of the digital multimedia broadcasting (DMB) system or in the form of an electronic service guide (ESG) of the digital video broadcast-handheld (DVB-H) system.

Further, the broadcasting receiving module 111 receives broadcasting signals using various broadcasting systems. For example, the broadcasting receiving module 111 can receive digital broadcasting signals using digital broadcasting systems such as the digital multimedia broadcasting-terrestrial (DMB-T) system, the digital multimedia broadcasting-satellite (DMB-S) system, the media forward link only (MediaFLO) system, the DVB-H system and the integrated services digital broadcast-terrestrial (ISDB-T) systems. The broadcasting receiving module 111 can also be constructed to be suited to broadcasting systems providing broadcasting signals other than the above-described digital broadcasting systems. In addition, the broadcasting signals and/or broadcasting related information received through the broadcasting receiving module 111 can be stored in the memory 160.

Further, the mobile communication module 112 transmits/receives a radio signal to/from at least one of a base station, an external terminal and a server on a mobile communication network. The radio signal can include a voice call signal, a video telephony call signal or data in various forms according to transmission and receiving of text/multimedia messages.

Also, the wireless Internet module 113 corresponds to a module for wireless Internet access and can be included in the mobile terminal 100 or externally attached to the mobile terminal 100. Wireless LAN (WLAN) (Wi-Fi), wireless broadband (Wibro), world interoperability for microwave access (Wimax), high speed downlink packet access (HSDPA) and so on can be used as a wireless Internet technique.

Further, the local area communication module 114 corresponds to a module for local area communication. Bluetooth, radio frequency identification (RFID), infrared data association (IrDA), ultra wideband (UWB) and ZigBee can be used as a local area communication technique.

In addition, the position information module 115 confirms or obtains the position of the mobile terminal. A global positioning system (GPS) module is a representative example of the position information module 115. According to the current technology, the GPS module 115 can calculate information on distances between one point (object) and at least three satellites and information on the time when the distance information is measured and apply trigonometry to the obtained distance information to obtain three-dimensional position information on the point (object) according to a latitude, longitude and altitude at a predetermined time. Furthermore, a method of calculating position and time information using three satellites and correcting the calculated position and time information using another satellite is also used. In addition, the GPS module 115 continuously calculates the current position in real time and calculates velocity information using the position information.

Referring to FIG. 1, the A/V input unit 120 is used to input an audio signal or a video signal and can include a camera 121 and a microphone 122. The camera 121 processes image frames of still images or moving images obtained by an image sensor in a video telephony mode or a photographing mode. The processed image frames can be displayed on a display unit 151.

Further, the image frames processed by the camera 121 can be stored in the memory 160 or transmitted to an external device through the radio communication unit 110. The mobile terminal 100 can also include at least two cameras according to constitution of the terminal.

In addition, the microphone 122 receives an external audio signal in a call mode, a recording mode or a speed recognition mode and processes the received audio signal into electric audio data. The audio data can be converted into a form that can be transmitted to a mobile communication base station through the mobile communication module 112 and output in the call mode. Also, the microphone 122 can employ various noise removal algorithms for removing noise generated when the external audio signal is received.

Further, the user input unit 130 receives input data for controlling the operation of the terminal from a user. The user input unit 130 can include a keypad, a dome switch, a touch pad (constant voltage/capacitance), jog wheel, jog switch and so on.

The sensing unit 140 senses the current state of the mobile terminal 100, such as an open/close state of the mobile terminal 100, the position of the mobile terminal 100, whether a user touches the mobile terminal 100, the direction of the mobile terminal 100 and acceleration/deceleration of the mobile terminal 100 and generates a sensing signal for controlling the operation of the mobile terminal 100. For example, the sensing unit 140 can sense whether a slide phone is opened or closed when the mobile terminal 100 is the slide phone, can sense whether the power supply 190 supplies power and whether the interface 170 is connected to an external device, etc. The sensing unit 140 can also include a proximity sensor.

Further, the output unit 150 generates visual, auditory or tactile output and can include the display unit 151, an audio output module 152, an alarm 153 and a haptic module 154. The display unit 151 displays information processed by the mobile terminal 100. For example, the display unit 151 displays a user interface (UI) or graphic user interface (GUI) related to a telephone call when the mobile terminal is in the call mode. The display unit 151 also displays a captured or/and received image, UI or GUI when the mobile terminal 100 is in the video telephony mode or the photographing mode.

In addition, the display unit 151 can include at least one of a liquid crystal display, a thin film transistor liquid crystal display, an organic light-emitting diode display, a flexible display, a three-dimensional display, a transparent display, etc.

That is, some of these displays can be of a transparent type or a light transmission type, which is referred to as a transparent display. In more detail, the transparent display includes a transparent liquid crystal display. The rear structure of the display unit 151 can also be of the light transmission type. Accordingly, a user can see an object located behind the body of the mobile terminal 100 through the display unit 151.

The mobile terminal 100 can also include at least two display units 151 according to constitution of the terminal. For example, the mobile terminal 100 can include a plurality of displays that are arranged on a single face at a predetermined distance or integrated. The plurality of displays can also be arranged on different sides of the terminal.

When the display unit 151 and a sensor sensing touch (referred to as a touch sensor hereinafter) form a layered structure, which is referred to as a touch screen hereinafter, the display unit 151 can be used as an input device in addition to an output device. Further, the touch sensor can be in the form of a touch film, a touch sheet and a touch pad, for example.

The touch sensor can be constructed such that it converts a variation in pressure applied to a specific portion of the display unit 151 or a variation in capacitance generated at a specific portion of the display unit 151 into an electric input signal. The touch sensor can also be constructed such that it can sense pressure of touch as well as the position and area of touch.

When touch input is applied to the touch sensor, a signal corresponding to the touch input is transmitted to a touch controller. The touch controller then processes the signal and transmits data corresponding to the processed signal to the controller 180. Accordingly, the controller 180 can detect a touched portion of the display 151.

Referring again to FIG. 1, the proximity sensor included in the sensing unit 140 can be located in an internal region of the mobile terminal, surrounded by the touch screen, or near the touch screen. The proximity sensor senses an object approaching a predetermined sensing face or an object located near the proximity sensor using electromagnetic force or infrared rays without having mechanical contact. The proximity sensor also has a lifetime longer than that of a contact sensor and has wide applications.

Further, the proximity sensor includes a transmission type photo-electric sensor, a direct reflection type photo-electric sensor, a mirror reflection type photo-electric sensor, a high-frequency oscillating proximity sensor, a capacitive proximity sensor, a magnetic proximity sensor, an infrared proximity sensor, etc.

Further, a capacitive touch screen is constructed such that a proximity of a pointer is detected through a variation in an electric field according to the proximity of the pointer. In this instance, the touch screen (touch sensor) can be classified as a proximity sensor.

In addition, an action of approaching the pointer to the touch screen while the pointer is not in contact with the touch screen such that location of the pointer on the touch screen is recognized Will be referred to as a "proximity touch" and an action of bring the pointer into contact with the touch screen will be referred to as a "contact touch" in the following description. Further, a proximity touch point of the pointer on the touch screen corresponds to a point of the touch screen to which the pointer corresponds perpendicularly to the touch screen when the pointer proximity-touches the touch screen.

The proximity sensor also senses a proximity touch and a proximity touch pattern (for example, a proximity touch distance, a proximity touch direction, a proximity touch velocity, a proximity touch time, a proximity touch position, a proximity touch moving state, etc.). Information corresponding to the sensed proximity touch action and proximity touch pattern can be displayed on the touch screen.

Further, the audio output module 152 can output audio data received from the radio communication unit 110 or stored in the memory 160 in a call signal receiving mode, a telephone call mode or a recording mode, a speech recognition mode and a broadcasting receiving mode. The audio output module 152 outputs audio signals related to functions (for example, a call signal incoming tone, a message incoming tone, etc.) performed in the mobile terminal 100. The audio output module 152 can include a receiver, a speaker, a buzzer, etc.

In addition, the alarm 153 outputs a signal for indicating a generation of an event of the mobile terminal 100. Examples of events generated in the mobile terminal include receiving a call signal, receiving a message, inputting a key signal, inputting touch, etc. The alarm 153 can output signals in forms different from video signals or audio signals, for example, a signal for indicating generation of an event through vibration. The video signals or the audio signals can also be output through the display unit 151 or the audio output module 152.

Further, the haptic module 154 generates various haptic effects that the user can feel. A representative example of the haptic effects is vibration. The intensity and pattern of vibration generated by the haptic module 154 can also be controlled. For example, different vibrations can be combined and output or can be sequentially output.

In addition, the haptic module 154 can generate a variety of haptic effects including an effect of stimulus according to arrangement of pins vertically moving for a contact skin face, an effect of stimulus according to a jet force or sucking force of air through a jet hole or a sucking hole, an effect of stimulus of rubbing the skin, an effect of stimulus according to a contact of an electrode, an effect of stimulus using an electrostatic force and an effect according to a reproduction of cold and warmth using an element capable of absorbing or radiating heat in addition to vibrations.

The haptic module 154 can not only transmit haptic effects through direct contact, but also allow the user to feel haptic effects through kinesthetic sense of his or her fingers or arms. The mobile terminal 100 can also include at least two haptic modules 154 according to a constitution of the mobile terminal.

Further, the memory 160 can store a program for the operation of the controller 180 and temporarily store input/output data (for example, a phone book, messages, still images, moving images, etc.). The memory 160 can store data about vibrations and sounds in various patterns, which are output from when a touch input is applied to the touch screen.

The memory 160 can also include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk and an optical disk.

The mobile terminal 100 can also operate in relation to a web storage performing the storing function of the memory 160 on the Internet.

In addition, the interface 170 serves as a path to all external devices connected to the mobile terminal 100. The interface 170 receives data from the external devices or power and transmits the data or power to the internal components of the mobile terminal 100 or transmits data of the mobile terminal 100 to the external devices. The interface 170 can include a wired/wireless headset port, an external charger port, a wired/wireless data port, a memory card port, a port for connecting a device having a user identification module, an audio I/O port, a video I/O port, an earphone port, etc., for example.

In addition, an identification module is a chip that stores information for authenticating the authority to use the mobile terminal 100 and can include a user identify module (UIM), a subscriber identify module (SIM) and a universal subscriber identify module (USIM). A device (referred to as an identification device hereinafter) including the identification nodule can be manufactured in the form of a smart card. Accordingly, the identification device can be connected to the mobile terminal 100 through a port.

The interface 170 can serve as a path through which power from an external cradle is provided to the mobile terminal 100 when the mobile terminal 100 is connected to the external cradle or a path through which various command signals input by the user through the cradle to the mobile terminal 100. The various command signals or power input from the cradle can be used as a signal for confirming whether the mobile terminal 100 is correctly set in the cradle.

The controller 180 also controls the overall operation of the mobile terminal. For example, the controller 180 performs control and processing for voice communication, data communication and video telephony. The controller 180 can also include a multimedia module 181 for playing multimedia. The multimedia module 181 can be included in the controller 180 or be separated from the controller 180. The controller 180 can also perform a pattern recognition process capable of recognizing handwriting input or picture-drawing input applied to the touch screen as characters or images.

The power supply 190 receives external power and internal power and provides power required for the operations of the components of the mobile terminal under the control of the controller 180.

Various embodiments of the present disclosure can be implemented in a computer or similar device readable recording medium using software, hardware or a combination thereof, for example. According to a hardware implementation, the embodiments of the present disclosure can be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electrical units for executing functions. In some instances, the embodiments can be implemented by the controller 180.

According to a software implementation, embodiments such as procedures or functions can be implemented with a separate software module executing at least one function or operation. Software codes can be implemented according to a software application written in an appropriate software language. Furthermore, the software codes can be stored in the memory 160 and executed by the controller 180.

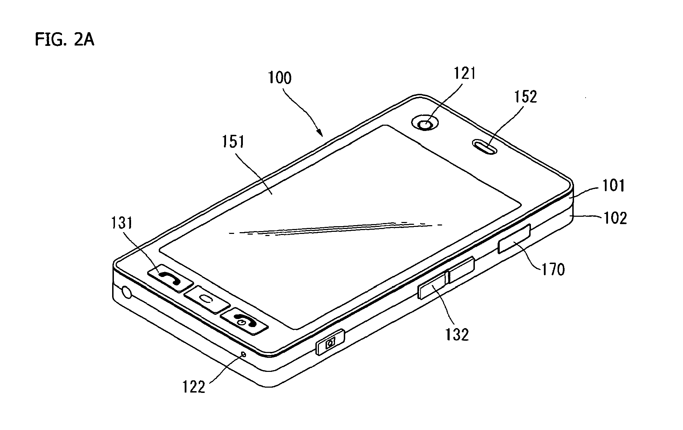

Next, FIG. 2A is a front perspective view of a mobile terminal or a handheld terminal 100 according to an embodiment of the present disclosure. In this example, the handheld terminal 100 has a bar type terminal body. However, the present disclosure is not limited to a bar type terminal and can be applied to terminals of various types including a slide type, folder type, swing type and swivel type terminals having at least two bodies that are relatively movably combined.

The terminal body includes a case (a casing, a housing, a cover, etc.) forming the exterior of the terminal 100. In the present embodiment, the case is divided into a front case 101 and a rear case 102. Various electronic components are arranged in the space formed between the front case 101 and the rear case 102. At least one middle case can also be additionally arranged between the front case 101 and the rear case 102. Further, the cases can be formed of plastics through injection molding or made of a metal material such as stainless steel (STS) or titanium (Ti).

The display unit 151, the audio output unit 152, the camera 121, user input units 131 and 132, the microphone 122 and the interface 170 can be arranged in the terminal body, specifically, in the front case 101. Also, the display unit 151 occupies most of the main face of the front case 101. The audio output unit 152 and the camera 121 are arranged in a region in proximity to one of both ends of the display unit 151, and the user input unit 131 and the microphone 122 are located in a region in proximity to the other end of the display unit 151. The user input unit 132 and the interface 170 are also arranged on the sides of the front case 101 and the rear case 102.

In addition, the user input unit 130 is operated to receive commands for controlling the operation of the handheld terminal 100 and in this example includes input units 131 and 132. The input units 131 and 132 can be referred to as manipulating portions and employ any tactile manner in which a user operates the input units 131 and 132 while having tactile feeling.

The input units 131 and 132 can receive various inputs. For example, the first input unit 131 receives commands such as a start, end and scroll commands and the second input unit 132 receives commands such as a volume control command for controlling the volume output the audio output unit 152 or a conversion command for converting the display unit 151 to a touch recognition mode.

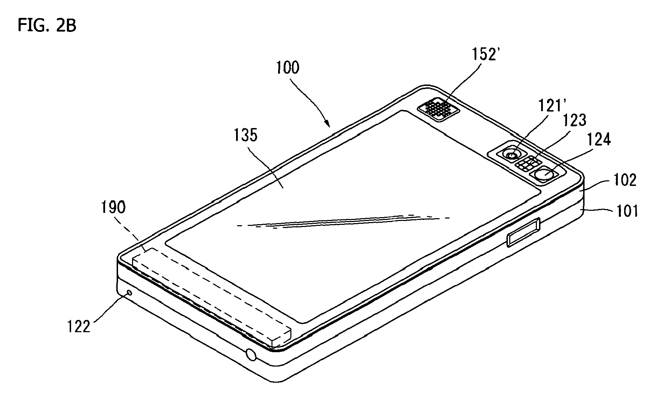

Next, FIG. 2B is a rear perspective view of the handheld terminal shown in FIG. 2A according to an embodiment of the present disclosure. Referring to FIG. 2A, a camera 121' can be additionally attached to the rear side of the terminal body, that is, the rear case 102. The camera 121' has a photographing direction opposite to that of the camera 121 shown in FIG. 2A and can have pixels different from those of the camera 121 shown in FIG. 2A.

For example, the camera 121 preferably has low pixels such that it can capture an image of the face of a user and transmit the image to a receiving part during video telephony, while the camera 121' has high pixels because it captures an image of a general object and does not immediately transmit the image in many situations. The cameras 121 and 121' can also be attached to the terminal body such that they can be rotated or popped-up.

Further, a flash bulb 123 and a mirror 124 are additionally arranged in proximity to the camera 121'. The flash bulb 123 lights an object when the camera 121' takes a picture of the object, and the mirror 124 is used for the user to look at his/her face in the mirror when the user wants to self-photograph himself/herself using the camera 121'.

An audio output unit 152' can be additionally provided on the rear side of the terminal body. Thus, the audio output unit 152' can achieve a stereo function with the audio output unit 152 shown in FIG. 2A and be used for a speaker phone mode when the terminal is used for a telephone call.

A broadcasting signal receiving antenna can also be additionally attached to the side of the terminal body in addition to an antenna for telephone calls. The antenna constructing a part of the broadcasting receiving module 111 shown in FIG. 1 can be set in the terminal body such that the antenna can be pulled out of the terminal body.

Further, the power supply 190 for providing power to the handheld terminal 100 is set in the terminal body. The power supply 190 can be included in the terminal body or detachably attached to the terminal body.

As shown, a touch pad 135 for sensing touch can be additionally attached to the rear case 102. The touch pad 135 can be of a light transmission type as the display unit 151. In this instance, if the display unit 151 outputs visual information through both sides thereof, the visual information can be recognized through the touch pad 135. The information output through both sides of the display unit 151 can be controlled by the touch pad 135. Otherwise, a display is additionally attached to the touch pad 135 such that a touch screen can be arranged even in the rear case 102.

Further, the touch pad 135 operates in connection with the display unit 151 of the front case 101. The touch pad 135 can be located in parallel with the display unit 151 and behind the display unit 151. The touch panel 135 can also be identical to or smaller than the display unit 151 in size.

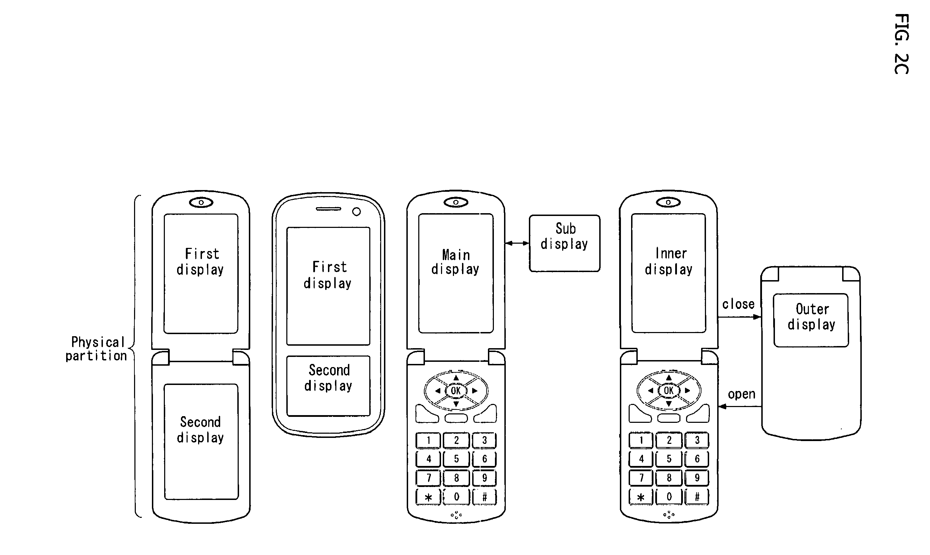

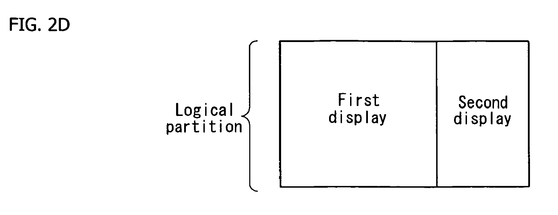

Next, FIGS. 2C and 2D illustrate the mobile terminal 100 and the display unit 151 according to various embodiments of the present disclosure. Referring to FIG. 2C, the display unit can include a first display and a second display which are physically separated from each other. In a folder type or slide type mobile terminal having two bodies connected through a hinge or slide, the first display (or main display) can be formed on the inner face or outer face of one of the bodies and the second display (or sub display) can be formed on the inner face or outer face of the other body.

The sub display is separated from the mobile terminal and detachably combined with the mobile terminal body through an interface to display data from the mobile terminal 100. The display unit can also include first and second displays which are logically separated from each other in a display panel, as illustrated in FIG. 2D.

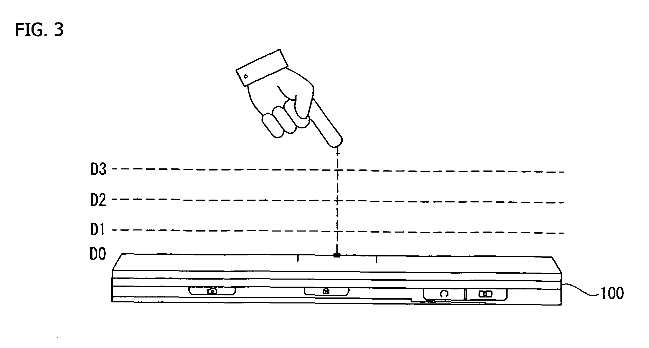

Next, FIG. 3 is a conceptual view for explaining a proximity depth of the proximity sensor. As shown in FIG. 3, when a pointer such as a user's finger approaches the touch screen, the proximity sensor located inside or near the touch screen senses the approach and outputs a proximity signal. Further, the proximity sensor can be constructed such that it outputs a proximity signal according to the distance between the pointer approaching the touch screen and the touch screen (referred to as "proximity depth").

In addition, the distance in which the proximity signal is output when the pointer approaches the touch screen is referred to as a detection distance. The proximity depth can be known by using a plurality of proximity sensors having different detection distances and comparing proximity signals respectively output from the proximity sensors.

FIG. 3 shows the section of the touch screen in which proximity sensors capable of sensing three proximity depths are arranged. Proximity sensors capable of sensing less than three or more than four proximity depths can also be arranged in the touch screen.

In particular, when the pointer completely comes into contact with the touch screen (D0), this action is recognized as contact touch. When the pointer is located within a distance D1 from the touch screen, this action is recognized as proximity touch of a first proximity depth. Also, when the pointer is located in a range between the distance D1 and a distance D2 from the touch screen, this action is recognized as proximity touch of a second proximity depth.

In addition, when the pointer is located in a range between the distance D2 and a distance D3 from the touch screen, this action is recognized as proximity touch of a third proximity depth, and when the pointer is located at longer than the distance D3 from the touch screen, this action is recognized as cancellation of proximity touch.

Accordingly, the controller 180 can recognize the proximity touch as various input signals according to the proximity distance and proximity position of the pointer with respect to the touch screen and perform various operation controls according to the input signals.

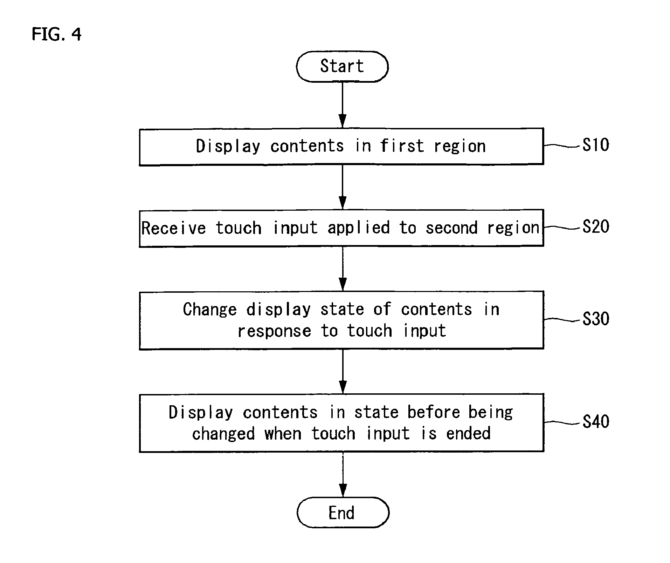

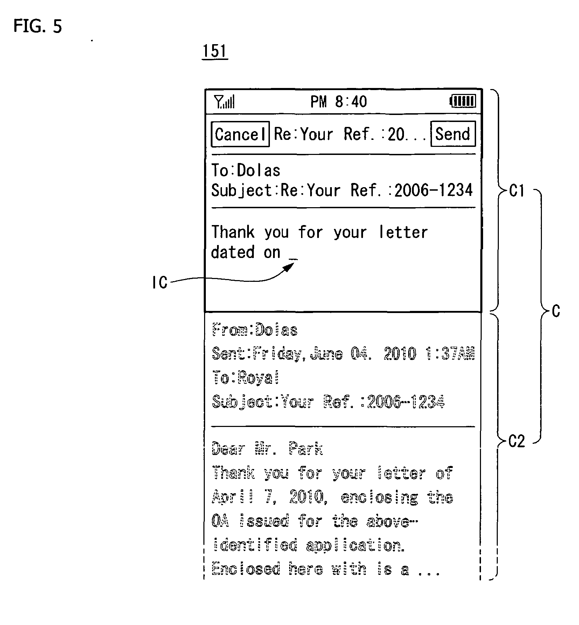

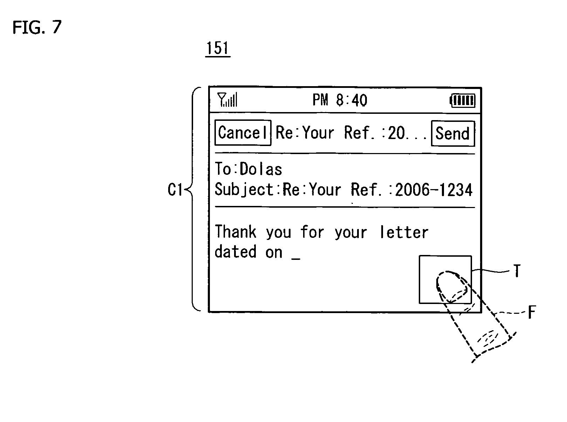

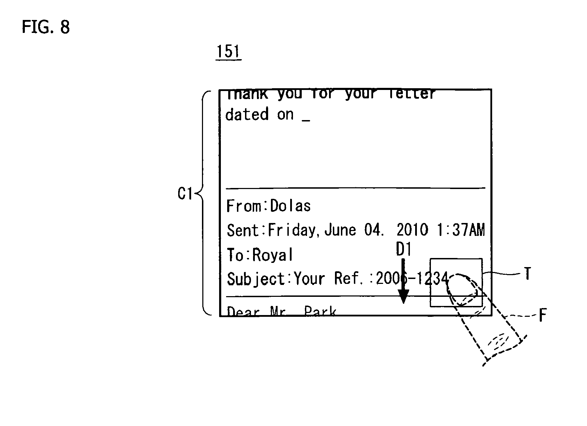

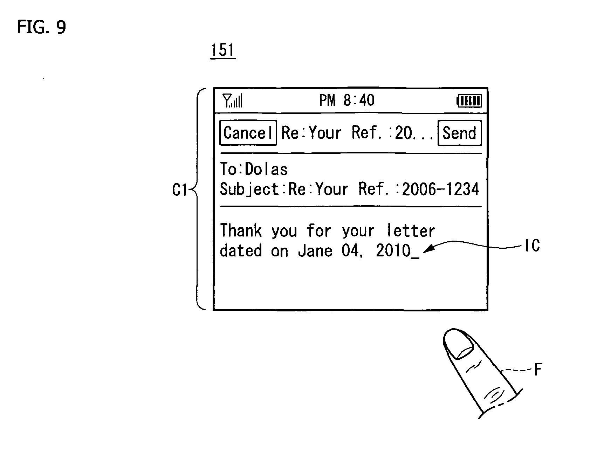

Next, FIG. 4 is a flowchart showing an implementation of an operation of the mobile terminal 100, FIG. 5 illustrates an operation of displaying contents in a first region according to the operation shown in FIG. 4, and FIGS. 6 and 7 illustrate an operation of receiving a touch input applied to a second region according to the operation shown in FIG. 4. FIG. 8 illustrates an operation of changing a display state of the contents in response to the touch input according to the operation shown in FIG. 4, and FIG. 9 illustrates an operation of displaying the contents in the state before being changed when the touch input is cancelled according to the operation shown in FIG. 4.

Referring to FIG. 4, the controller 180 of the mobile terminal 100, shown in FIG. 1, may perform an operation S10 of displaying contents C in the first region and an operation S20 of receiving a touch input applied to the second region T. The first region may correspond to the area of the display unit 151. That is, at least part of the contents C may be visually output. The quantity of the contents C may exceed the physical display range of the display unit 151, as shown in FIG. 5. For example, the contents C may correspond to a large quantity of e-mail. In this case, when the quantity of the contents C exceeds the physical display range of the display unit 151, the controller 180 may control the display unit 151 to display only some of the contents C. The part of the contents C, which is currently displayed on the display unit 151, may be a first contents region C1 and the non-displayed part of the contents C may be a second contents region C2.

The first and second contents regions C1 and C2 may be changed frequently according to a touch input of a user to scroll the screen of the display unit 151. For example, while a portion of e-mail is being displayed currently on the display unit 151, the e-mail may be scrolled if a touch input is applied to the bottom of the display unit 151. When the e-mail is scrolled, part of the first contents region C1 may become the second contents region C2 that is not displayed on the display unit 151 and part of the current second contents region C2 may become the first contents region C1 that is displayed on the display unit 151.

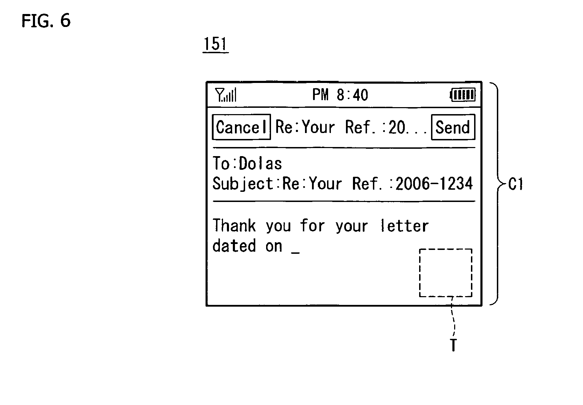

The second region T may be a part to which a signal for operating the display state of the contents C is input. Referring to FIG. 6, the second region T may be a part of the display unit 151. That is, the second region T may be superposed on the first region that can substantially correspond to the physical range of the display unit 151. The second region T may not be displayed on the display unit 151 until the user touches the second region T. That is, the boundary of the second region T is not displayed usually although a specific region of the display unit 151 is allocated to the second region T, as shown in FIG. 6. Accordingly, display of the contents C on the display unit 151 may not be restricted due to the second region T. Though the second region T is located at the bottom of the right side of the display unit 151 of the mobile terminal 100 in FIG. 6, the position and size of the second region T may be changed according to the controller 180 or the user.

When the second region T is touched, the controller 180 may display a solid line along the boundary of the second region T. That is, the controller 180 does not usually display the second region T and so displays the second region T only when the second region T is touched by a finger F of the user. When the touch input applied to the second region T is received, the controller 180 may perform an operation S30 of changing the display state of the contents C in response to the touch input.

The user touching the second region T may perform a drag touch by moving the finger F in a specific direction within the second region T. When the drag touch is carried out in the second region T, the controller 180 may change the display state of the contents C displayed in the first region in response to the drag touch. For example, the user may move the finger F in a first direction D1, as shown in FIG. 8. When the finger F is moved in the first direction D1, the controller 180 may move the first contents region C1 in the first direction D1. The distance in which the contents C are scrolled may be greater than the distance in which the finger F is moved in the first direction D1 in the second region T. That is, the moving distance of the finger F may be increased at a specific rate and the contents C may be moved by a distance corresponding to the increased moving distance of the finger F. Accordingly, the user can easily move the contents C to a desired position without largely moving the finger F.

When the touch input applied to the second region T is ended, an operation S40 of displaying the contents in the state before being changed may be performed. In other words, the displayed content is returned to its initial display state prior to the touch input. Ending the touch input applied to the second region T may mean removing the finger F touching the display unit 151. Here, the touch may include both a physical touch and a proximity touch applied to the display unit 151.

When the touch input applied to the second region T is ended, the controller 180 may also cancel the display of the second region T on the display unit 151. Furthermore, the controller 180 may return the display unit 151 to the state before the touch input is applied. Accordingly, the user can continue an operation being executed before the second region T is touched without performing an additional operation. For example, if the user needs to confirm a specific part of received e-mail while replying to the received e-mail, the user can touch the second region T to scroll the content of the received e-mail so as to confirm the desired part. When the user confirms the specific part of the e-mail, the user may cancel the touch applied to the second region T. When the user cancels the touch applied to the second region T, the display unit 151 may be returned to the state before the second region T is touched, as shown in FIG. 9. Here, a cursor IC may be located at a point where the cursor IC waits for an input of the user before the second region T is touched irrespective of the user's touch input applied to the second region T. Accordingly, the user can continuously input characters to reply the received e-mail without performing an additional operation.

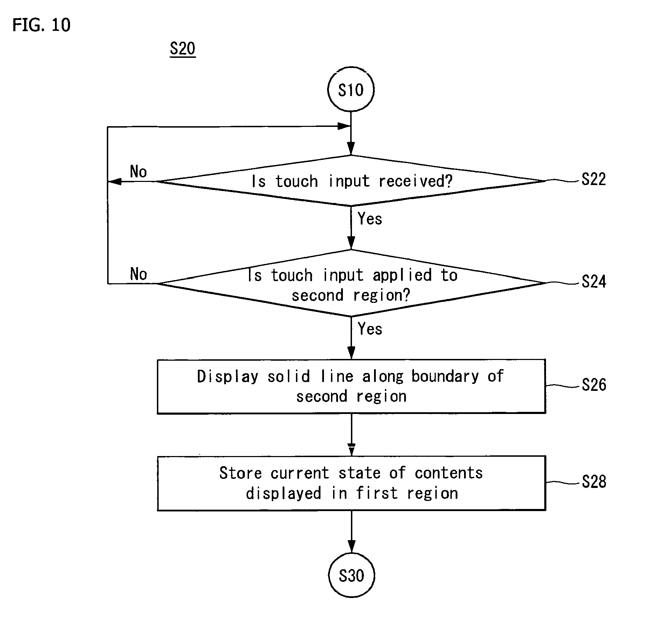

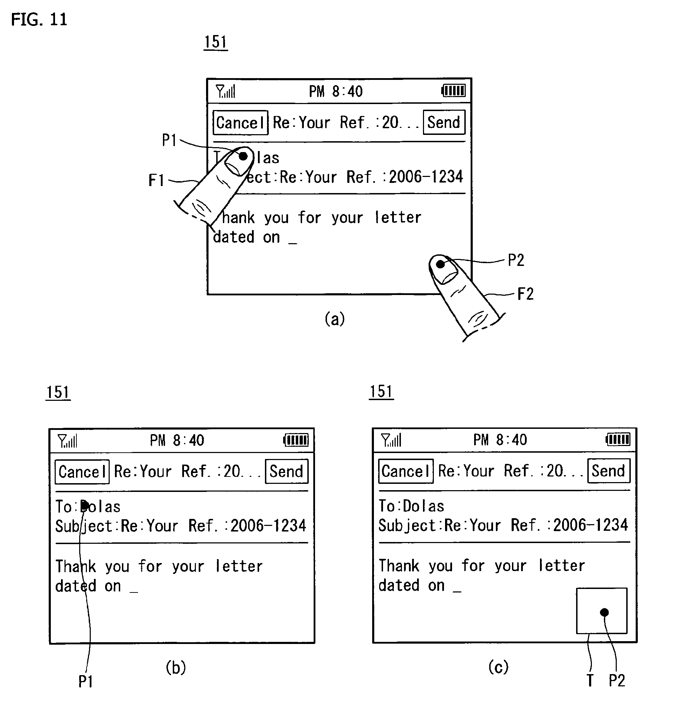

Next, FIG. 10 is a flowchart showing in more detail the operation of receiving the touch input applied to the second region T according to the operation shown in FIG. 4, and FIG. 11 illustrates an operation of the mobile terminal 100 according to the operation shown in FIG. 10. Referring to FIG. 10, the operation (S20 of FIG. 4) of receiving the touch input applied to the second region T may include an operation S22 of determining whether a touch input is received and an operation S24 of determining whether the received touch input is applied to the second region T.

Because a user's touch input may be applied to an arbitrary point of the display unit 151, it may be necessary to determine whether a touch input is received and determine whether the touch input is applied to the second region T. When the touch input applied to the second region T is received, an operation S26 of displaying a solid line along the boundary of the second region T and an operation S28 of storing the current state of the contents displayed in the first region may be performed.

The controller 180 may display the solid line along the boundary of the second region T to visually inform the user that the touch input is correctly applied to the second region T and the mobile terminal 100 waits for a user's additional touch input. Furthermore, the controller 180 may store the current state of the first region in the memory 160, shown in FIG. 1, to display the initial display state when the touch input applied to the second region T is ended.

Referring to FIG. 11A, the user may touch an arbitrary point of the display unit 151. If the user touches a first point P1 with a first finger F1, the display state of the display unit 151 may be not changed, as shown in FIG. 11B. If the user touches a second point P2 with a second finger F2, the boundary of the second region T may be displayed, as shown in FIG. 11C.

In this exemplary embodiment, the second region T is not displayed on the display unit 151 until the user touches the second region T, and thus the display unit 151 can be effectively used. When the second region T is touched, the second region T may be displayed on the display unit 151 to visually inform the user that the user touches a correct point. The display of the boundary of the second region T may be maintained until the touch applied to the second region T is cancelled.

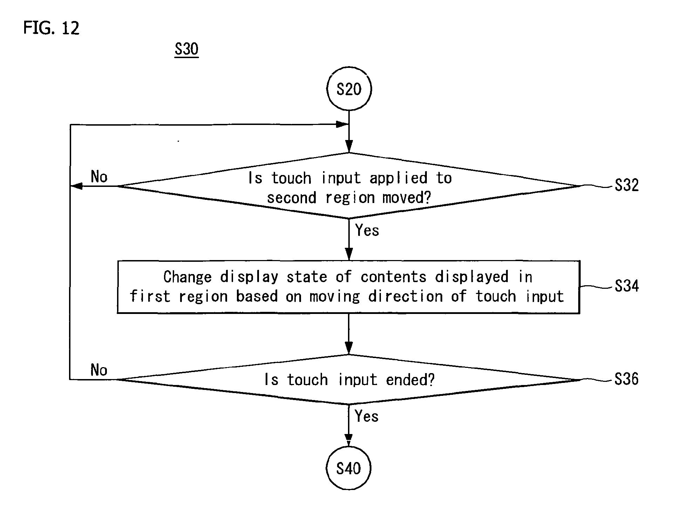

Next, FIG. 12 is a flowchart showing in more detail the operation of changing the display state of the contents in response to the touch input according to the operation shown in FIG. 4, and FIGS. 13 and 14 illustrate an operation of the mobile terminal according to the operation shown in FIG. 12. Referring to FIG. 12, the operation (S30 of FIG. 4) of changing the display state of the contents in response to the touch input may include an operation S32 of determining whether the touch input applied to the second region T is moved. For example, the user may touch the second region T with a finger and then move the finger without canceling the touch. That is, the user may drag the finger in every direction within the displayed second region T. The controller 180 may receive data from the touch sensor and determine whether the user's touch is moved.

When the touch applied to the second region T is moved, an operation S34 of changing the display state of the contents displayed in the first region based on the direction in which the touch is moved may be performed.

The display state of the contents displayed in the first region may be changed according to the direction of the touch input applied to the second region T. If the user moves the finger to the top of the second region T, for example, the contents displayed in the first region may be moved upward. The moving direction of the finger in the second region T and the moving direction of the contents correspond to each other, and thus a more intuitive operation can be achieved. Furthermore, the moving distance of the finger in the second region T may be increased at a specific rate and reflected in the moving distance of the contents. For example, when the moving distance of the finger in the second region T is one, the moving distance of the contents displayed in the first region may be ten.

Subsequently, an operation S36 of determining whether the touch input is ended may be carried out. As noted above, ending the touch input may mean canceling a physical contact between the user's finger and the display unit 151 or removing the finger from a proximity touch region. When the touch input is ended, it may be considered that the user does not want to change the display state of the contents using the second region T any more.

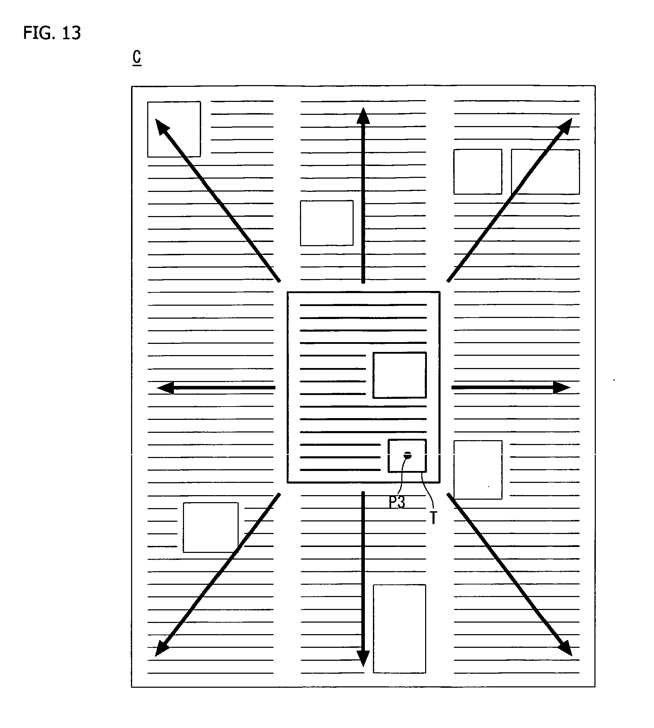

Referring to FIG. 13, the display unit 151 may display only part of the contents C. The contents C may be composed of a single large page or multiple pages, and thus the whole contents C may not be displayed in the physical range of the display unit 151. In this case, only part of the contents C may be displayed on the display unit 151. Here, the user may touch a third point P3 in the second region T to navigate a desired part of the contents C.

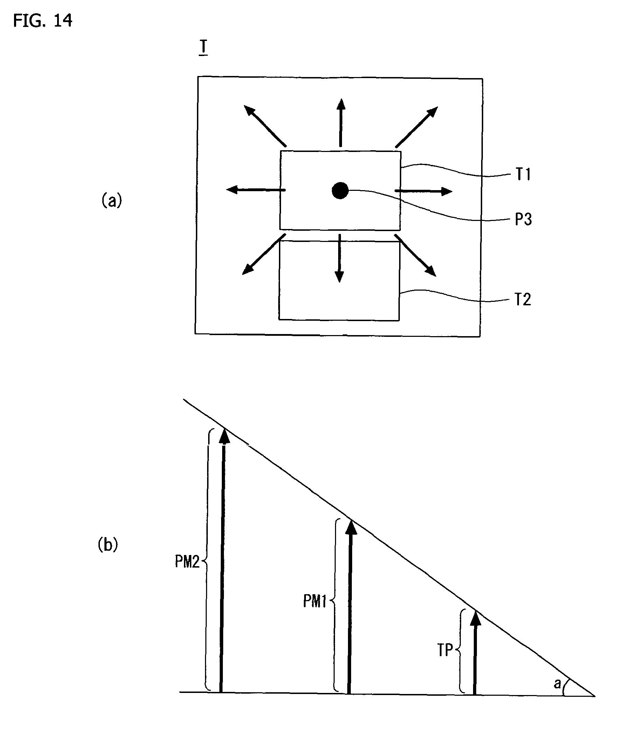

Referring to FIG. 14A, the user who touches the third point P3 in the second region T with a finger may drag the touch to a desired point. The part of the contents C, displayed on the display unit 151, may depend on the dragging direction of the user's finger, as shown in FIG. 13. Touch indication boxes T1 and T2 may be displayed in the second region T.

The touch indication boxes T1 and T2 may be used to inform the user of the point currently touched by the user. For example, when the user touches the center of the second region T, the first touch indication box T1 having the touched center at the center may be displayed. When the user touches a point below the center of the second region T, the second touch indication box T2 having the touched point at the center may be displayed. The touch indication boxes T1 and T2 are displayed according to the user's touch, and thus the user can easily recognize whether the touch is performed as the user intends.

Referring to FIG. 14B, the moving distance of the touch input applied to the second region T may be increased at a specific rate. For example, when the moving distance of the touch input applied to the second region T is TP, the contents C may be moved by a distance PM1 or PM2 at a predetermined rate determined by a linear correlation represented by α.

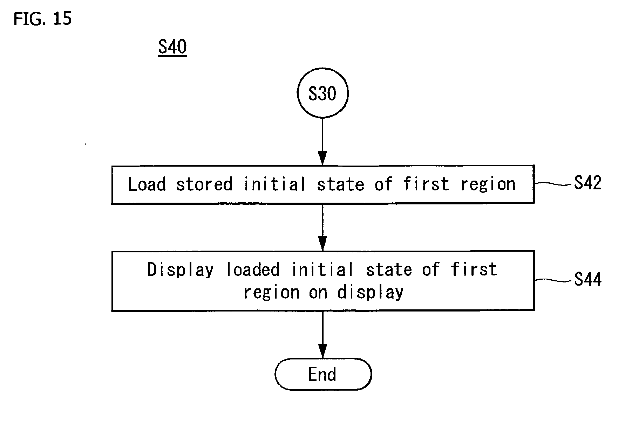

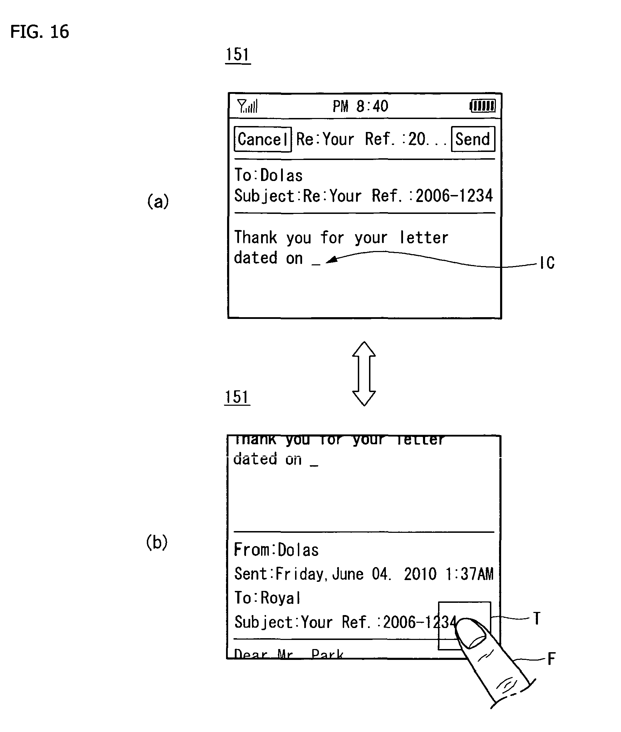

Next, FIG. 15 is a flowchart showing in more detail the operation of displaying the contents in the initial state before being changed when the touch input is ended according to the operation shown in FIG. 4 and FIG. 16 illustrates an operation of the mobile terminal according to the operation shown in FIG. 15. Referring to FIG. 15, the operation of displaying the contents in the initial state before being changed when the touch input is ended may include an operation S42 of loading the stored initial state of the first region.

When the touch input applied to the second region T is ended, the first region may be returned to the initial display state. To achieve this, the operation (S28 of FIG.. 10) of storing the current state of the contents C displayed in the first region is performed when the touch input applied to the second region T is received and data corresponding to the stored state may be loaded in the operation S42. When the stored initial state of the first region is loaded, an operation S44 of displaying the loaded initial state of the first region on the display unit 151 may be performed. As such, the first region can be returned to the initial display state when the touch input applied to the second region T is cancelled, and thus the user can continue the operation being executed before the second region T is touched without performing an additional operation.

Referring to FIG. 16A, the user may reply to received e-mail before touching the second region T. The user may need to confirm the content of the received e-mail while replying the e-mail. Accordingly, the user may touch the second region T with the finger F and drags the touch to easily scroll the content of the e-mail displayed in the first region, as shown in FIG. 16B. When the user ends the touch applied to the second region T, the display unit 151 may be returned to the display state shown in FIG. 16A and the cursor IC may waits for an additional input of the user at the initial position.

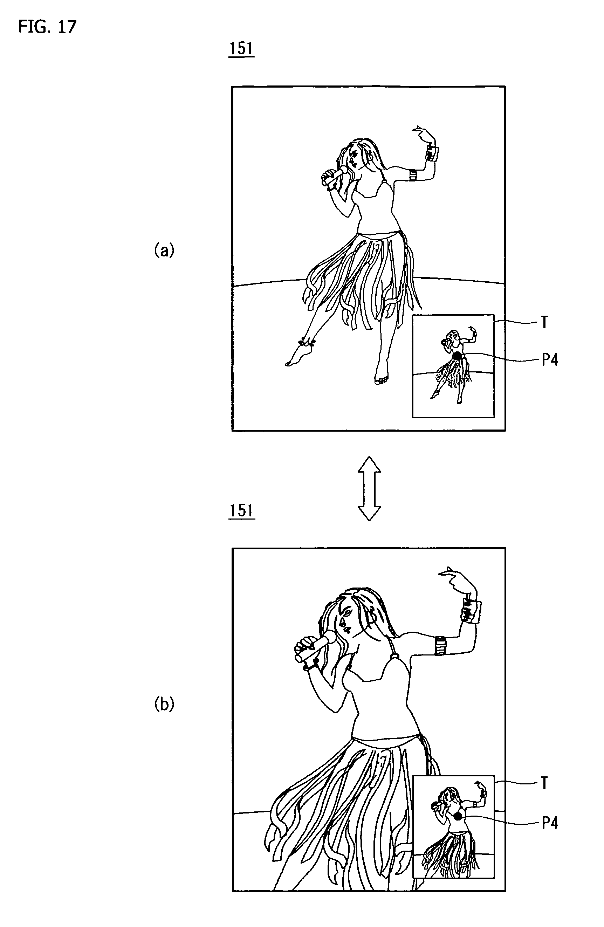

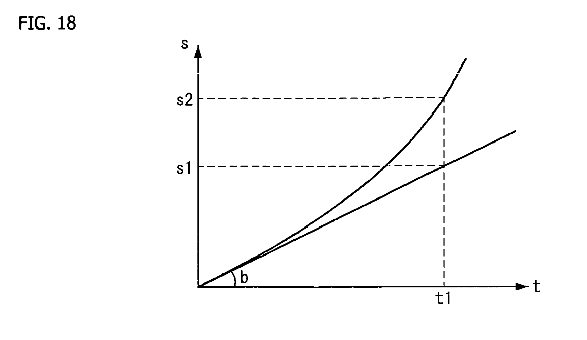

Next, FIG. 17 illustrates another implementation of the operation of the mobile terminal and FIG. 18 is a graph showing enlargement rates of the screen of the mobile terminal according to the operation shown in FIG. 17. The controller 180 of the mobile terminal 100 may enlarge contents displayed in the first region when the user touches the second region T.

Referring to FIG. 17A, the user may touch a fourth point P4 of the second region T. The fourth point P4 may correspond to a part of the contents that the user wants to enlarge. As shown in FIG. 17B, when the user touches the fourth point P4, the contents displayed in the first region may be enlarged. When the touch applied to the second region T is cancelled, the display state of the first region may be returned to the initial display state shown in FIG. 17A.

Referring to FIG. 18, a degree to which the contents displayed in the first region are enlarged may be proportional to the time for which the second region T is touched. That is, if the second region T is touched for t1, the size of the contents displayed in the first region may be increased a multiple S1 of the original size of the contents. The degree to which the contents are enlarged may be proportional to the time. Furthermore, the degree may be directly proportional to the time or proportional to the time in the form of a quadric function. If the degree to which the contents are enlarged is proportional to the time in the form of a quadric function S2, the contents may be further enlarged even when the second region T is touched for the same time.

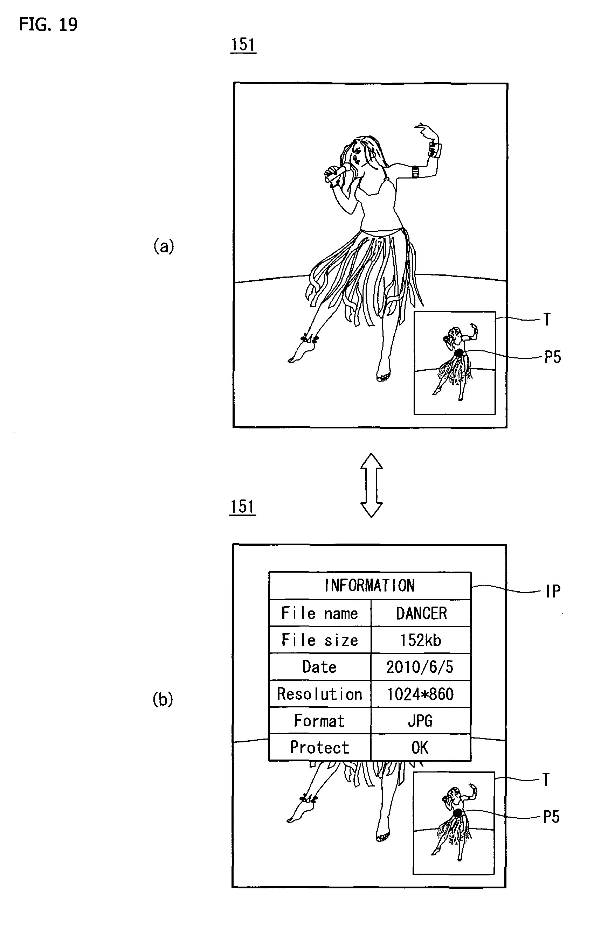

Having described the operation of the mobile terminal with respect to FIG. 4, it is understood that the second region T may be used to control many different aspects relating to the displayed contents. Accordingly, FIGS. 19 through 26 illustrate different implementations of operations of the mobile terminal.

Referring to FIGS. 19A and 19B, when the second region T is touched, detailed information about contents displayed in the first region may be displayed. The detailed information may be included in the header of contents data or acquired through the wireless communication unit 110, shown in FIG. 1. As shown in FIG. 19A, the user may touch a fifth point P5 of the second region T. When the user touches the fifth point P5 of the second region T, contents information window IP may be displayed in the first region, as shown in FIG. 19B. When the user cancels the touch applied to the second region T, the contents information window IP may disappear. That is, the display unit 151 may be returned to the display state shown in FIG. 19A when the touch applied to the second region T is ended.

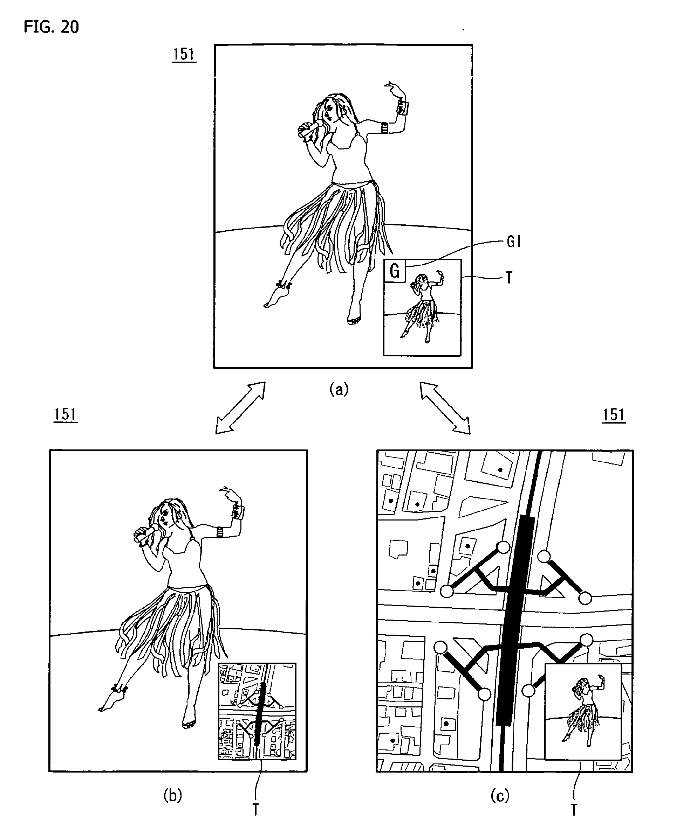

Referring to FIGS. 20A, 20B and 20C, when the second region T is touched, it is possible to display geographic information tagged on contents. Specific contents may be displayed in the first region, as shown in FIG. 20A. Here, the displayed contents may include geographic information. The geographic information may include a place where the contents are generated. When the contents include the geographic information, it is possible to inform the user that the contents include the geographic information when the second region T is touched. That is, a geographic information icon GI may be displayed.

When the user touches the displayed geographic information icon GI, a map image may be displayed in the second region T, as shown in FIG. 20B. When the user touches the displayed geographic information icon GI, the map image may be displayed in the first region, as shown in FIG. 20C. The touch applied to the second region T and the touch applied to the geographic information icon GI may be continuously performed. Furthermore, after the second region T is touched and the touch is cancelled, the geographic information icon GI may be touched. Even when the touch applied to the second region T is cancelled for a while, the controller 180 may control the touch applied to the second region T to continue if the second region T is re-touched within a predetermined time.

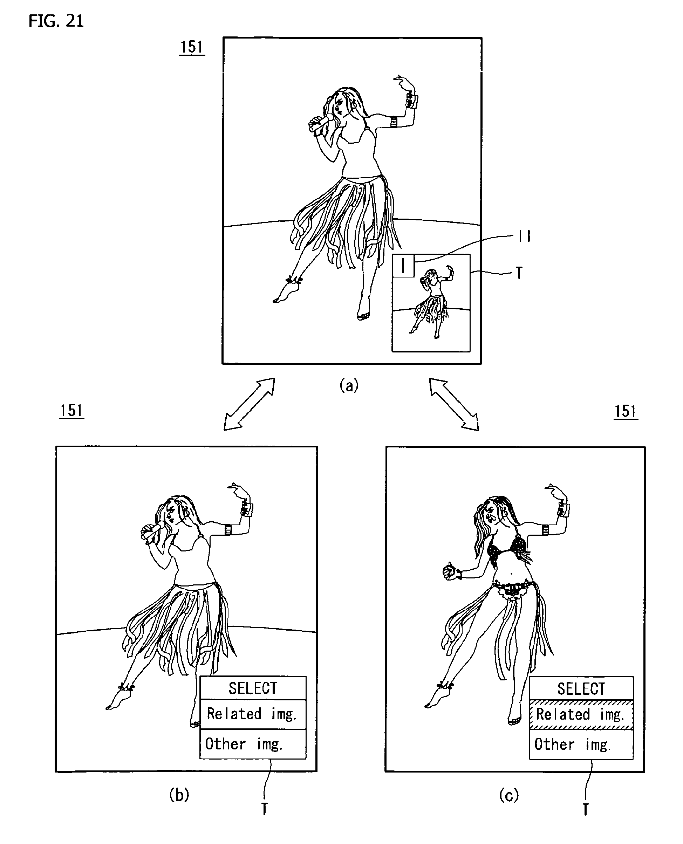

While Figs. 21A, 21B, and 21C shows geographic data associated with the displayed contents, it is also possible to have other information associated with the displayed content depending on the type of displayed contents. For example, if the displayed content was a document, such as a patent application, the second region T may be used to show additional content linked to specific aspects of the document, e.g., descriptions of the figures may be linked to the actual figures such that touching the second region T displays the linked figure. As another example, if the displayed contents were e-mails, touching the second region T may display one or more e-mails associated with the displayed e-mail, e.g., a chain of e-mails. In both cases, removing the touch input from the second region T restores the display to the initial display state.

Referring to FIGS. 21A, 21B and 21C, when the second region T is touched, information about the displayed contents may be displayed. Specific contents may be displayed in the first region, as shown in FIG. 21A. When the second region T is touched, related information icon II indicating that there are contents related to the contents displayed in the first region may be displayed. When the user selects the related information icon II, as shown in FIG. 21B, a menu by which the user can select contents to be displayed may be displayed in the second region T. When the user selects specific contents through the menu, the selected contents may be displayed in the first region, as shown in FIG. 21C.

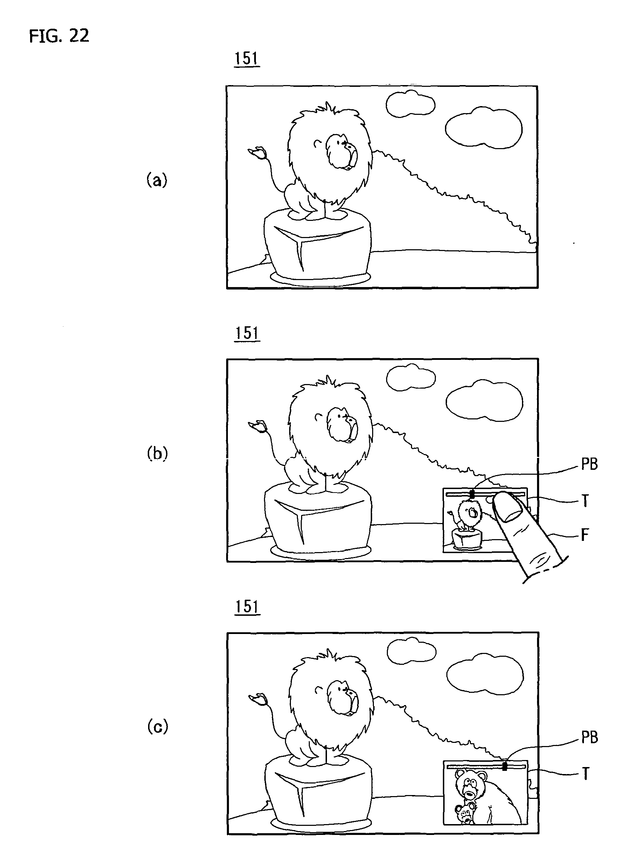

Referring to FIGS. 22A, 22B and 22C, when the second region T is touched, information associated with video contents being displayed in the first region may be displayed. For example, specific video contents may be played in the first region, as shown in FIG. 22A. The user may touch the second region T using the finger F. When the user touches the second region T, the contents being played in the first region may be displayed in the second region T as shown in FIG. 22B. Furthermore, a progress bar PB used to control playback position of the contents displayed in the second region T may be displayed. The user may touch a specific point of the displayed progress bar PB.

When the user touches the specific point of the progress bar PB, the image displayed in the first region and the image displayed in the second region T may become different from each other, as shown in FIG. 22C. That is, images before and after the image being displayed in the first region may be displayed in the second region T without affecting the image being displayed in the first region.

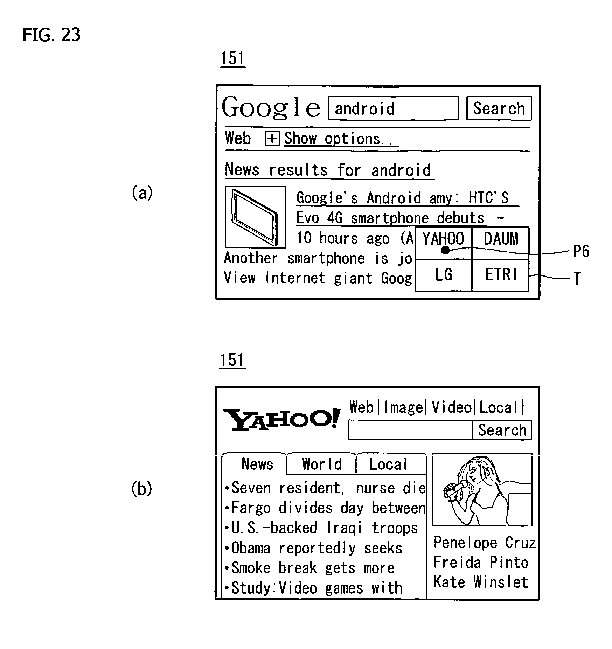

Referring to FIGS. 23A and 23B, a web page that is displayed in the first region may be browsed by touching the second region T. For example, a web page for the GOOGLE search engine may be displayed in the first region, as shown in FIG. 23A. When the user touches the second region T, other web pages that can be linked may be displayed. Furthermore, a web page to which the user is currently linked, which is not being displayed currently on the display unit 151 in the first region, may be displayed in the second region. For example, when the user touches a sixth point P6, a web page displaying the YAHOO search engine corresponding to the sixth point P6 may be displayed. Furthermore, when the user cancels the touch applied to the second region T, the web page shown in FIG. 23A may be displayed. That is, the user can view a web page other than the web page currently displayed in the first region for a moment and return to the currently displayed web page.

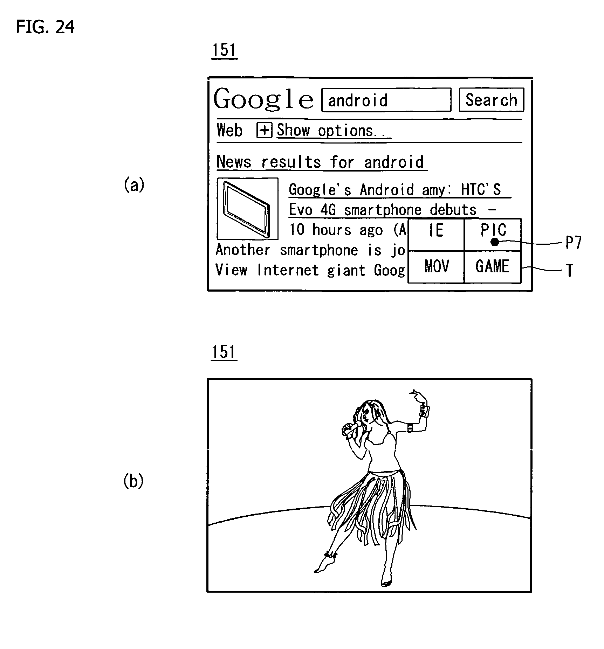

Referring to FIGS. 24A and 24B, an application to be displayed in the first region may be selected by touching the second region T. For example, a web page may be displayed in the first region, as shown in FIG. 24A. That is, a web browser application may be executed and activated. When the user touches the second region T, other applications that are being executed in the background or can be executed may be displayed. The user can select one of the displayed applications. For example, when the user selects a picture view application, the selected picture view application instead of the web browser application is executed in the first region, as shown in FIG. 24B. When the user ends the touching operation performed on the second region T, the web browser application shown in FIG. 24A may be redisplayed.

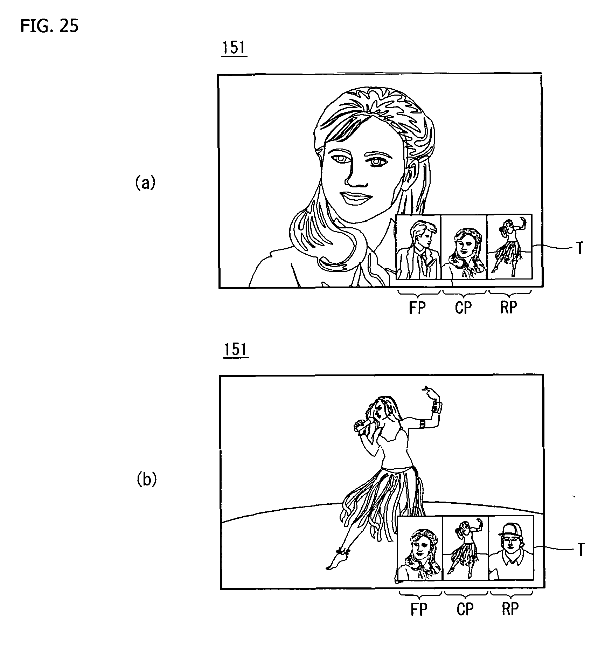

Referring to FIGS. 25A and 25B, contents associated with contents currently displayed in the first region may be displayed in the second region T by touching the second region T. For example, a specific picture may be displayed in the first region, as shown in FIG. 25A. When the user touches the second region T, pictures before and after the specific picture currently displayed in the first region may be displayed in the second region T. If a second picture CP is being displayed in the first region, for example, first and third pictures FR and RP may also be displayed in the second region T.

The user can select a specific picture from the pictures displayed in the second region T, as shown in FIG. 25B. For example, the user can select the third picture RP. The selected third picture RP may be displayed in the first region. The third picture RP may be moved to the second position in the second region T according a user's choice and a new picture may be displayed in the third position in the second region T. While FIGS. 25A and 25B show that the pictures are displayed in the first and second regions, the present disclosure is not limited to pictures. For example, a specific broadcasting image may be displayed in the first region and other broadcasting images that can be viewed may be displayed in the second region T such that the user can select a desired broadcasting image.

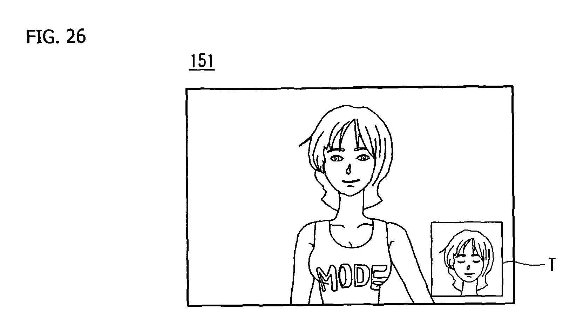

Referring to FIG. 26, the user may capture an image using the camera 121, shown in FIG. 1, of the mobile terminal 100. Here, the image captured through the camera 121 may be displayed in the first region. When the user touches the second region T, the controller 180 may display an image previously captured. The user can confirm the previously captured image by touching the second region T, and thus the user can operate the mobile terminal 100 conveniently.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal in accordance with the present disclosure may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method in accordance with the present disclosure may use provided for controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the inventive concept. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

The invention thus being described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A mobile terminal comprising:
a display; and
a controller configured to partition the display into a first region to display at least a portion of contents capable of being visually outputted on the display and a second region to receive a touch input,
wherein the controller is configured to display the portion of contents in an initial display state prior to the touch input being applied to the second region, to change the display state of the portion of contents in response to the touch input applied to the second region, and to return the display to the initial display state when the touch input is removed.

2. The mobile terminal of claim 1,
wherein the controller is configured to display the second region such that the second region is visually delineated from the first region when the touch input is applied to the second region.

3. The mobile terminal of claim 2,
wherein the controller is configured to display a solid line along the boundary of the second region.

4. The mobile terminal of claim 1,
wherein at least a part of the first region and at least a part of the second region overlap each other.

5. The mobile terminal of claim 1,
wherein the controller is configured to store the initial display state of the portion of contents displayed in the first region in a memory when the touch input is applied to the second region.

6. The mobile terminal of claim 1,
wherein the initial display state of the portion of contents is the display state of the portion of contents prior to the touch input applied to the second region.

7. The mobile terminal of claim 1,
wherein the controller is configured to detect a drag touch applied to the second region, and the controller is configured to change the display state of the contents displayed in the first region on the basis of the moving direction of the drag touch.

8. The mobile terminal of claim 1,
wherein the controller is configured to display a cursor for a user's input at a first point of the first region irrespective of the touch input applied to the second region.

9. The mobile terminal of claim 1,
wherein the controller is configured to change the size of the portion of contents displayed in the first region in proportion to the time the touch input is applied and to display the portion of contents in the changed size.

10. The mobile terminal of claim 1,
wherein the controller is configured to display detailed information about the portion of contents in the first region in response to the touch input applied to the second region.

11. The mobile terminal of claim 1,
wherein the controller is configured to display geographic information related to the portion of contents in the first region in response to the touch input applied to the second region.

12. The mobile terminal of claim 1,
wherein the contents correspond to an image acquired through a camera and the controller displays the acquired image in the first region and displays at least one image, captured by the camera and stored, in the second region when receiving the touch input applied to the second region.

13. A mobile terminal comprising:
a display; and
a controller configured to partition the display into a first region to display at least a portion of contents capable of being visually outputted on the display and a second region to receive a touch input,
wherein the controller is configured to display the portion of contents in an initial display state prior to the touch input being applied to the second region, to display information associated with the portion of contents displayed in the first region in the second region when the touch input is applied to the second region, and to return the display to the initial display state when the touch input is removed.

14. The mobile terminal of claim 13,
wherein the controller is configured to display the second region such that the second region is visually delineated from the first region when the touch input is applied to the second region.

15. A method of controlling a mobile terminal having a display and a controller, the method comprising:
displaying at least a portion of contents capable of being visually outputted in a first region of a display;
receiving a touch input through a second region of the display;
changing a display state of the portion of contents displayed in the first region from an initial display state to a changed display state in response to receiving the touch input; and
displaying the contents in the initial display state when the touch input is removed.
